# EUROPEAN PATENT SPECIFICATION

(11) **EP 2 757 796 B1**
(45) Date of publication and mention of the grant of the patent: **28.03.2018**
(21) Application number: 13152140.3
(22) Date of filing: 22.01.2013
(51) Int. Cl.: H04N 21/418, H04N 21/436

(54) **Broadcast receiver, and method of controlling the same**
Rundfunkempfänger und Steuerungsverfahren dafür
Récepteur de radiodiffusion et son procédé de commande

(43) Date of publication of application: 23.07.2014
(73) Proprietor: Panasonic Corporation, Kadoma-shi Osaka 571-8501 (JP)
(72) Inventor: Koga, Masashi, Osaka 540-6207 (JP); Fujiishi, Shuji, Osaka 540-6207 (JP)
(74) Representative: Vigand, Philippe

(56) References cited:
- US-A1- 2007 098 169
- US-B1- 6 973 022

## Description

### Field

The present disclosure relates to a broadcast receiver which receives an encrypted broadcast signal.

### Background

Digital broadcasting including terrestrial broadcasting, broadcast satellite (BS) broadcasting, communication satellite (CS) broadcasting, or the like is currently delivered. In such digital broadcasting, a system is generally used in which an encrypted broadcast signal is inputted to a broadcast receiver, and the encrypted broadcast signal is decrypted in the broadcast receiver (see Patent Literature (PTL) 1, for example).

In a digital broadcast receiver for Europe, a digital video broadcasting common interface (DVB-CI) standard is used which includes a common interface (CI) slot and a conditional access module (CAM) which is shaped in a card to be inserted in the CI slot.

Under the standard, for decrypting paid broadcasting, the CI slot is provided in the broadcast receiver, and the CAM is inserted in the CI slot.

With this, a broadcasting organization of the paid broadcasting can provide the paid broadcasting only to subscribers by previously distributing, only to the subscribers of the paid broadcasting, the CAM or a smart card containing subscription information.

In addition, a set top box is sold which includes two systems of tuners and two systems of CI slots, in order to watch, with a single set-top box, two types of paid broadcasting which require contract.

### Citation List

### Patent Literature

[PTL 1] Japanese unexamined patent application publication No. 2011-40838
[PTL 2] US 6 973 022

### Non Patent Literature

[NPL 1] EUROPEAN STANDARD EN50221, Common Interface Specification for Conditional Access and other Digital Video Broadcasting Decoder Applications, English Version, Ref. No. EN50221: 1996E, February 1997
[NPL 2] CI Plus Specification. V1. 1 (2008-11)

### Summary

### Technical Problem

In the set-top box as described above, a tuner and a CI slot are associated with each other on a one-on-one basis. Accordingly, a user cannot watch broadcasting unless the user inserts the CAM distributed by a contracted broadcasting organization in the CI slot corresponding to the tuner to which a broadcast signal from the contracted broadcasting organization is inputted. This means that the user cannot watch the paid broadcasting, if the user inserts the CAM to a wrong CI slot.

The present disclosure provides the broadcast receiver allowing a user to watch the paid broadcasting even if the user inserts the CAM in the wrong CI slot.

### Solution to Problem

A broadcast receiver according to the present disclosure includes: a first receiving unit configured to receive a broadcast wave and output a first transport stream (TS) signal; a second receiving unit configured to receive a broadcast wave and output a second TS signal; a first module connected to a first card module including therein a decryption circuit, the first module decrypting, using the decryption circuit, an inputted one of the first TS signal or the second TS signal, and outputting the decrypted first TS signal or the decrypted second TS signal; a second module connected to a second card module including therein a decryption circuit, the second module decrypting, using the decryption circuit, an inputted one of the first TS signal or the second TS signal, and outputting the decrypted first TS signal or the decrypted second TS signal; a decoder which decodes a signal outputted from the first module or the second module, and determines whether or not the signal is successfully decrypted; a switching unit configured to switch an input destination of the first TS signal or the second TS signal between the first module and the second module; and a controlling unit configured to control the switching by the switching unit, in which the controlling unit is configured to perform switching processing for: controlling the switching by the switching unit to cause the first TS signal to be inputted to the first module; and controlling the switching by the switching unit to cause the first TS signal to be inputted to the second module when the decoder determines that the signal outputted from the first module as a result of the input is not successfully decrypted.

### Advantageous Effects

With a broadcast receiver according to the present disclosure, a user can watch a paid broadcasting even if the user inserts a CAM in a wrong CI slot.

### Brief Description of Drawings

[FIG. 1] FIG. 1 is a block diagram which schematically shows a configuration of a conventional set-top box including a system of two-tuners and two slots.
[FIG. 2] FIG. 2 is a diagram which schematically shows a configuration of a set-top box according to Embodiment 1.
[FIG. 3] FIG. 3 is a block diagram which shows the configuration of the set-top box according to Embodiment 1.
[FIG. 4] FIG. 4 is a diagram which shows an appearance of a CAM.
[FIG. 5] FIG. 5 is a flowchart which shows CAM-switching processing in the set-top box according to Embodiment 1.
[FIG. 6] FIG. 6 is a diagram for illustrating an application example of the broadcast receiver.

### Description of Embodiments

Hereinafter, embodiments are described in detail, arbitrarily referring to the drawings. However, unnecessarily detailed description may be omitted. For example, detailed description for well-known matters or redundant description on a substantially same configuration may be omitted. This is to avoid the following description from being unnecessarily redundant, and to allow a person skilled in the art to comprehend the description easily.

It should be noted that inventors provide the attached drawings and the following description for allowing a person skilled in the art to adequately comprehend the present disclosure. Thus, it is not intended that subject matters recited in the scope of the claims are not limited by the drawings and the description.

### Embodiment 1

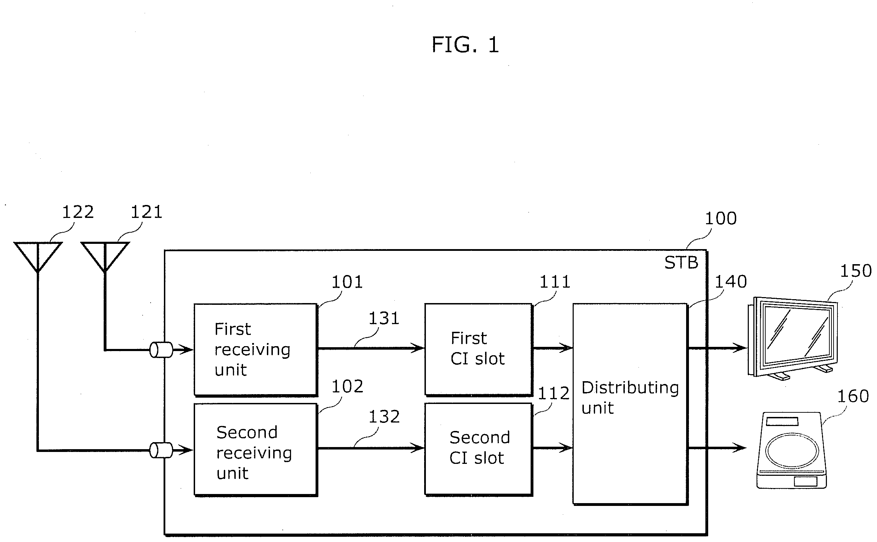

Hereinafter, Embodiment 1 is described with reference to FIGS. 1 to 4. In Embodiment 1, a case is described in which a broadcast receiver according to the present disclosure is achieved as a set-top box.

### [1-1. Configuration]

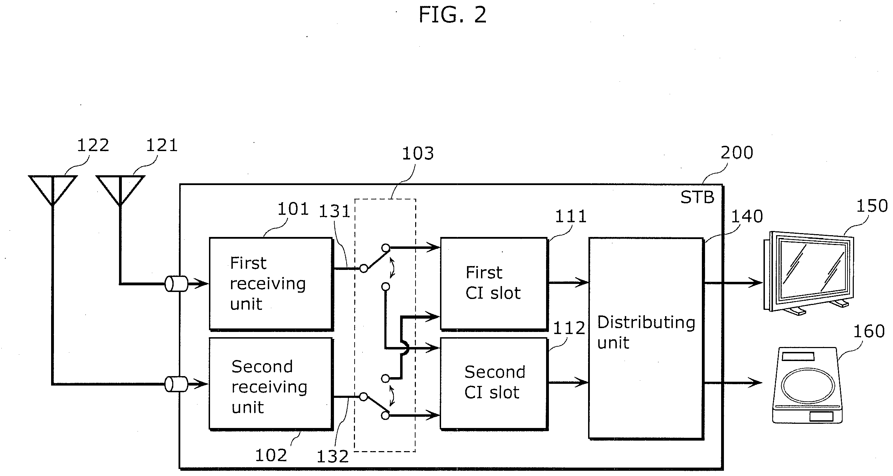

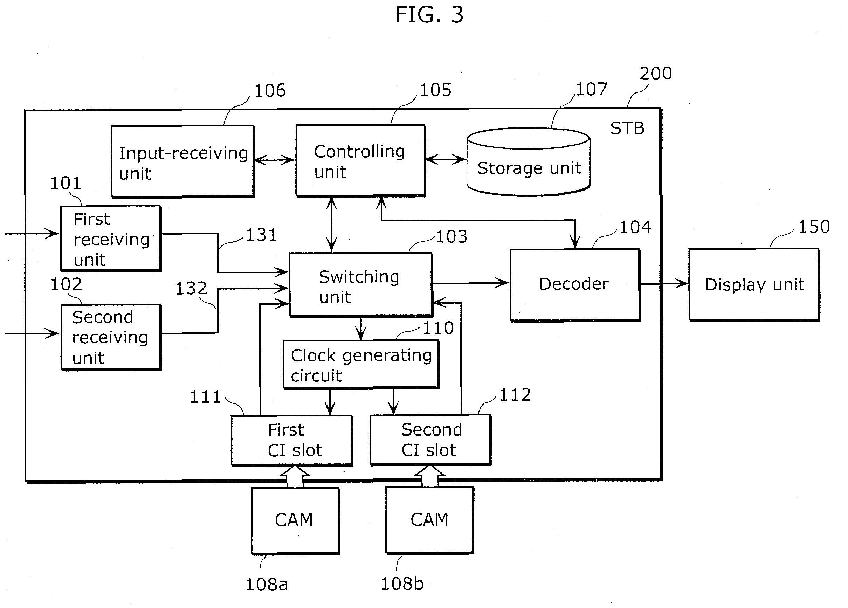

First, difference between a set-top box (STB) according to Embodiment 1 and a conventional STB is described, with reference to FIGS. 1 and 2. It should be noted that FIGS. 1 and 2 are used for schematically illustrating difference in STBs between Embodiment 1 and a conventional technique. Accordingly, description for FIGS. 1 and 2 may differ from those for FIG. 3 and subsequent drawings in detailed parts.

FIG. 1 is a block diagram which schematically shows a configuration of the conventional STB having a system composed of two tuners and two slots.

As shown in FIG. 1, a STB 100 includes a first receiving unit 101, a second receiving unit 102, a first CI slot 111, a second CI slot 112, and a distributing unit 140. A user can watch television broadcasting by connecting an output of the distributing unit 140 to a television 150. In addition, the user can also record the television broadcasting by connecting the output of the distributing unit 140 to a hard disc drive (HDD) recorder 160.

In the STB 100, the receiving unit and the CI slot are associated with each other on a one-to-one basis.

Specifically, the first receiving unit 101 generates a first transport stream (TS) signal 131 from a broadcast wave received by a first antenna 121, and outputs the first TS signal 131 to the first CI slot 111. The second receiving unit 102 generates a second TS signal 132 from a broadcast wave received by a second antenna 122, and outputs the second TS signal 132 to the second CI slot 112.

The first CI slot 111 decrypts the first TS signal 131 using a decryption circuit in a CAM to be inserted in the first CI slot 111. Similarly, the second CI slot 112 decrypts the second TS signal 132 using a decryption circuit in a CAM to be inserted in the second CI slot 112.

In the configuration shown in FIG. 1, the first CI slot 111 cannot precisely decrypt the first TS signal 131, unless a first CAM in which a decryption key for decrypting the first TS signal 131 is stored is inserted in the first CI slot 111. Accordingly, a user cannot watch a program to be displayed using the first TS signal 131, unless the first CAM is inserted in the first CI slot 111. In other words, if a user erroneously inserts the first CAM in the second CI slot 112, the user cannot watch a program to be displayed using the first TS signal 131.

Similarly, in the configuration shown in FIG. 1, the first CI slot 111 cannot decrypt the second TS signal 132 unless the second CAM in which a decryption key for decrypting the second TS signal 132 is stored is inserted in the second CI slot 112. A user cannot watch the program to be displayed using the second TS signal 132. In other words, if a user erroneously inserts the second CAM in the first CI slot 111, the user cannot watch a program to be displayed using the second TS signal 132.

Meanwhile, FIG. 2 is a diagram which schematically shows a configuration of an STB 200 according to Embodiment 1.

As shown in FIG. 2, the STB 200 is different from the STB 100 in a point that a switching unit 103 is provided in the STB 200.

The switching unit 103 can switch destination to which the first TS signal 131 is inputted, between the first CI slot 111 and the second CI slot 112. Furthermore, the switching unit 103 can switch destination to which the second TS signal 132 is inputted, between the first CI slot 111 and the second CI slot 112.

With this, if the first CAM is inserted in either the first CI slot 111 or the second CI slot 112, the first TS signal 131 is decrypted. Accordingly, a user can watch the program resulting from the first TS signal 131. Similarly, if the second CAM is inserted in either the first CI slot 111 or the second CI slot 112, the second TS signal 132 is decrypted. Accordingly, a user can watch the program resulting from the second TS signal 132.

Next, a specific configuration of the STB 200 is described.

FIG. 3 is a block diagram which shows a configuration of the STB 200.

The STB 200 includes the first receiving unit 101, the second receiving unit 102, the first CI slot 111, the second CI slot 112, a decoder 104, the switching unit 103, a controlling unit 105, an input-receiving unit 106, and a memory unit 107. FIG. 3 also shows a CAM 108 including a CAM 108a and a CAM 108b which are to be respectively inserted in the first CI slot 111 and the second CI slot 112.

The first receiving unit 101 (a front end block) receives a broadcast wave of digital broadcasting, and outputs the first TS signal 131. Specifically, the first receiving unit 101 is a tuner module, for example. More specifically, the first receiving unit 101 performs synchronization and demodulation on the broadcast wave received by the first antenna 121 so as to generate the first TS signal 131, and outputs the generated signal to the switching unit 103.

The second receiving unit 102 receives a broadcast wave of the digital broadcasting, and outputs the second TS signal 132. Specifically, the second receiving unit 102 performs synchronization and demodulation on the broadcast wave received by the first antenna 121 so as to generate the second TS signal 132, and outputs the generated signal to the switching unit 103.

Although the first receiving unit 101 and the second receiving unit 102 have exactly the same configuration in Embodiment 1, they may have different configurations from each other.

Here, the broadcast wave received by the first receiving unit 101 and the second receiving unit 102 is, for example, a broadcast wave for terrestrial broadcasting, BS broadcasting, CS broadcasting, or the like.

To be specific, the first receiving unit 101 and the second receiving unit 102 can perform synchronization and demodulation on the broadcast wave or the like in a digital video broadcasting-terrestrial (DVB-T) standard, a digital video broadcasting-second generation terrestrial (DVB-T2) standard, a digital video broadcasting-cable (DVB-C) standard, or the like, which are used for the terrestrial broadcasting.

Furthermore, the first receiving unit 101 and the second receiving unit 102 can perform synchronization and demodulation on the broadcast wave in a plurality of broadcast standards including a digital video broadcasting-satellite (DVB-S) standard, a digital video broadcasting satellite-second generation (DVB-S2) standard, or the like, which are used for the BS broadcasting.

The first receiving unit 101 and the second receiving unit 102 may receive the broadcast wave through a cable from a cable television organization without using an antenna. Accordingly, the broadcast wave includes a signal to be received through a cable by the first receiving unit 101 and the second receiving unit 102.

The switching unit 103 performs switching the destination to which the first TS signal 131 outputted by the first receiving unit 101 is inputted, among the first CI slot 111, the second CI slot 112, or the decoder 104 to which the first TS signal 131 is to be directly inputted without passing through the first CI slot 111 and the second CI slot 112. The switching unit 103 also performs switching the destination to which the second TS signal 132 outputted by the second receiving unit 102 is inputted, among the first CI slot 111, the second CI slot 112, or the decoder 104 to which the second TS signal 132 is to be directly inputted without passing through the first CI slot 111 and the second CI slot 112.

The switching unit 103 inputs the TS signal decrypted by the first CI slot 111 and the second CI slot 112 to the decoder 104.

The first CI slot 111 decrypts the TS signal inputted by the switching unit 103. To be specific, the CAM 108a is inserted in the first CI slot 111, and the TS signal is decrypted using a decryption circuit in the CAM 108a.

The second CI slot 112 decrypts the TS signal inputted by the switching unit 103. To be specific, the CAM 108b is inserted in the second CI slot 112, and the TS signal is decrypted using a decryption circuit in the CAM 108b.

The TS signal which has been decrypted by the first CI slot 111 and the second CI slot 112 is again inputted to the switching unit 103, and further inputted to the decoder 104 by the switching unit 103.

Although the first CI slot 111 and the second CI slot 112 have exactly the same configuration in Embodiment 1, they may have different configurations from each other.

The decoder 104 decodes the decrypted TS signal inputted by the switching unit 103, and determines whether or not the TS signal is successfully decrypted.

Specifically, data which is included in a TS packet and indicates whether or not the encryption has been performed is read out using the decoder, and determination is performed as to whether or not the decoded TS signal has been correctly decrypted.

If the TS signal is successfully decrypted, the decoder 104 outputs the decoded TS signal (image signal) to a display device 150. It should be noted that the decoder 104 may output the decoded TS signal to a storage device, such as the HDD recorder 160.

The controlling unit 105 controls the overall STB 200. To be specific, the controlling unit 105 controls, for example, the switching performed by the switching unit 103. The controlling unit 105 changes channels and performs other processing, based on a user's instruction inputted to the input-receiving unit 106. Although the controlling unit 105 is achieved as a microprocessor in Embodiment 1, it can be achieved using a semiconductor element or the like. The controlling unit 105 may be configured only by hardware, or may be achieved by combining hardware and software.

The input-receiving unit 106 receives user's selection for channels, and the like. The input receiving unit 106 is specifically a receiving unit of a remote-controller, for example.

In the memory unit 107, priority information indicating a priority order for the switching by the switching unit 103 is stored. The memory unit 107 is specifically a non-volatile storage device, such as a flash memory.

The priority information is information indicating, for example, that when the first TS signal 131 is to be decrypted, the switching unit 103 inputs the first TS signal 131 to the first CI slot 111 in priority to the second CI slot 112.

Such a priority order is determined based on a history of the decryption, in Embodiment 1. Specifically, if the previous decryption on the first TS signal 131 is successfully performed by the first CI slot 111, next decryption on the first TS signal 131 is first performed by the first CI slot 111.

The display device 150 is, for example, a liquid-crystal display, a plasma display, an organic electro luminescence (EL) display, or the like.

Next, description is given to the CAM to be inserted in the first CI slot 111 and the second CI slot 112.

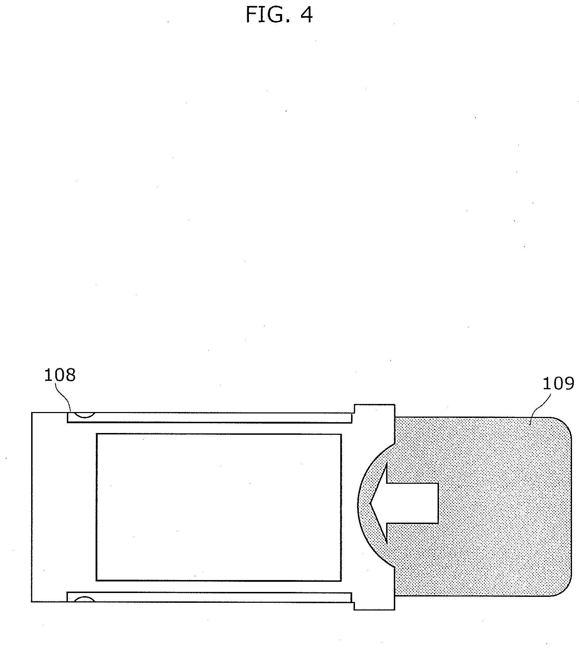

FIG. 4 is a diagram which shows an appearance of the CAM 108.

The CAM 108 is a card-shaped module which complies with the standard of a personal computer (PC) card. In the CAM 108, the decryption circuit for decrypting a TS signal is stored. In the CAM 108, a smart card 109 in which subscriber information in relation to a user or other information is recorded is further inserted.

The smart card 109 is sent from a broadcasting organization to a user. The user inserts the CAM 108 in which a smart card is inserted, in the first CI first slot 111 and the second CI slot 112 in the STB 200. With this, the CI slot in which the CAM 108 is inserted can decrypt the TS signal which the first receiving unit 101 or the second receiving unit 102 receives from the broadcasting organization.

### [1-2. Operation]

Hereinafter, switching processing performed in the STB 200 configured as described above is described.

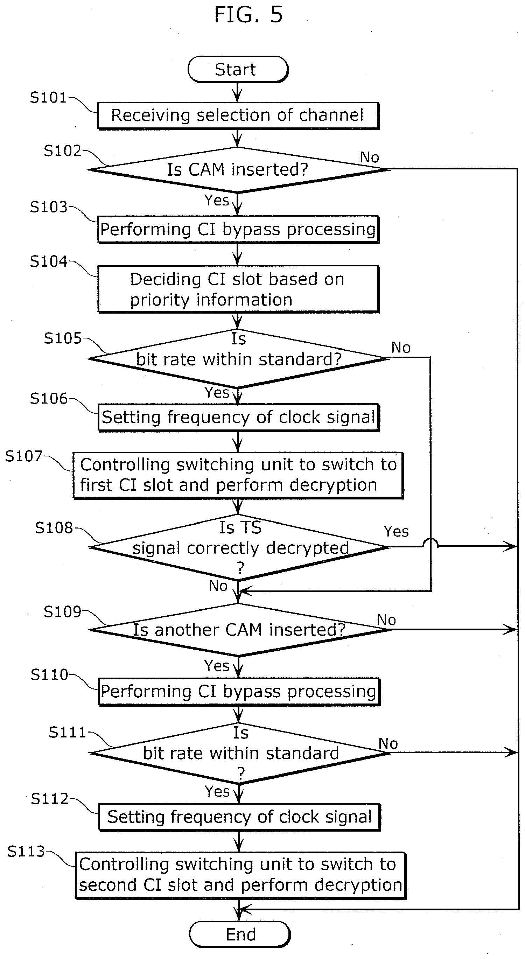

FIG. 5 is a flowchart indicating CAM-switching processing performed in the STB 200.

In the following description, it is assumed that the first TS signal 131 includes a video-and-audio signal in a first channel group, while the second TS signal 132 includes a video-and-audio signal in a second channel group.

In addition, it is also assumed that an operation of the flowchart shown in FIG. 5 is performed every time a user changes channels.

When a user selects a channel which belongs to the first channel group, the input-receiving unit 106 receives the user's selection for the channel (Step S101).

Subsequently, the controlling unit 105 detects whether or not the CAM 108 is inserted in at least one of the first CI slot 111 and the second CI slot 112 (Step S102).

If the CAM 108 is inserted neither in the first CI slot 111 nor in the second CI slot 112 (No in Step S102), the CAM-switching processing in the STB 200 terminates. In this case, if the received broadcasting is an encrypted paid-broadcasting, an error message is displayed on the display device 150.

If the CAM 108 is inserted at least one of the first CI slot 111 and the second CI slot 112 (Yes in Step S102), the controlling unit 105 performs CI bypass processing (Step S103). In the following description, it is assumed that, as an example, the CAM 108a is inserted in the first CI slot 111, while the CAM 108b is inserted in the second CI slot 112, as shown in FIG. 3.

The CI bypass processing is processing of stopping a flow of the TS signal being inputted in the first CI slot 111 and the second CI slot 112. In other word, the CI bypass processing is processing such that connection of a TS signal path from the receiving unit to the CI slot is released and the TS signal is directly inputted to the decoder 104.

Subsequently, the controlling unit 105 determines the CI slot to which the first TS signal 131 is to be inputted, based on the priority information stored in the memory unit 107 (Step S104). At this process, the controlling unit 105 decides that the first TS signal 131 is inputted to the first CI slot 111.

If the CAM 108 is not inserted in the CI slot as indicated by the priority information, in Step S104, the controlling unit 105 decides to input the first TS signal 131 to another CI slot.

Subsequently, the controlling unit 105 determines whether or not a bit rate of the first TS signal 131 complies with the standard of the CAM 108a inserted in the first CI slot 111 (Step S105). In the standard of common interface version (CIv) 1, a matchable maximum bit rate is defined to be 72 Mbps while defined to be 96 Mbps in the standard of CI+ (See PTLs 1 and 2).

To be specific, the controlling unit 105 acquires the bit rate of the first TS signal 131 using the first receiving unit 101, and determines a type of standard which corresponds to the CAM 108a based on authentication on the CAM 108a, for example.

If the bit rate of the first TS signal 131 does not comply with the standard which corresponds to the CAM 108a (No in Step S105), the processing is shifted to Step S109.

If the bit rate of the first TS signal 131 complies with the standard of the CAM 108a (Yes in Step S105), the controlling unit 105 sets a frequency of a clock signal to be outputted to the CAM 108a (Step S106). The frequency of the clock signal is set according to the bit rate acquired in Step S105.

Specifically, for example, the controlling unit 105 sets the frequency of the clock signal to be outputted to the CAM 108a to a largest frequency in a range complying with the bit rate acquired in Step S105, and to a frequency complying with the standard of the CAM 108a, among frequencies which can be generated by the clock generating circuit 110 mounted inside the STB 200.

Next, the controlling unit 105 controls the switching by the switching unit 103 to cause the first TS signal 131 to be inputted to the first CI slot 111 having high priority, and performs decryption on the first TS signal 131 using the decryption circuit in the CAM 108a (Step S107).

At this time, the clock signal having the frequency set in Step S106 is outputted to the CAM 108a. The clock signal may be outputted to the CAM 108a not from a clock generating circuit 110, but from the first receiving unit 101 or the like.

The first TS signal 131 which has been decrypted is inputted to the decoder 104 by the switching unit 103, and decoded by the decoder 104. The decoder 104 determines whether or not the decoded first TS signal is a normal video-and-audio signal. In other words, the decoder 104 determines whether or not the first TS signal is successfully decrypted in Step S107 (Step S108).

If the first TS signal 131 is successfully decrypted (Yes in Step S108), the CAM switching processing in the STB 200 terminates. In this case, a program corresponding to a channel selected by the user is displayed on the display device 150.

If the first TS signal 131 is not successfully decrypted (No in Step S108), the controlling unit 105 detects whether or not the CAM 108b is inserted in the second CI slot 112 allocated to the secondary highest priority (Step S109).

If the CAM 108b is not inserted in the second CI slot 112 (No in Step S109), the CAM switching processing in the STB 200 terminates. In this case, if the received broadcasting is an encrypted paid-broadcasting, an error message is displayed on the display device 150.

If the CAM 108b is inserted in the second CI slot 112 (Yes in Step S109), the controlling unit 105 performs the aforementioned CI bypass processing (Step S110).

Subsequently, the controlling unit 105 determines whether or not the bit rate of the first TS signal 131 complies with the standard of the CAM 108b inserted in the second CI slot 112 (Step S111).

If the bit rate of the first TS signal 131 does not comply with the standard of the CAM 108b (No in Step S111), the CAM switching processing in the STB 200 terminates. In this case, if the received broadcasting is an encrypted paid-broadcasting, an error message is displayed on the display device 150.

If the bit rate of the first TS signal 131 complies with the standard of the CAM 108b (Yes in Step S111), the controlling unit 105 sets the frequency of the clock signal to be outputted to the CAM 108b (Step S112). The frequency of the clock signal is set in the clock generating circuit 110, according to the bit rate acquired in Step S111.

Next, the controlling unit 105 controls the switching by the switching unit 103 to cause the first TS signal 131 to be inputted to the second CI slot 112 allocated to the secondary highest-priority, and performs decryption on the first TS signal 131 using the decryption circuit in the CAM 108b (Step S113).

If the first TS signal 131 is successfully decrypted, the decrypted first TS signal is successfully decoded by the decoder 104. Accordingly, in this case, a program corresponding to a channel selected by the user is displayed on the display device 150.

If the first TS signal 131 is not successfully decrypted, the decrypted first TS signal is not successfully decoded by the decoder 104. Accordingly, in this case, if the received broadcasting is an encrypted paid-broadcasting, an error message is displayed on the display device 150.

According to the aforementioned CAM switching processing, if the first CAM for decrypting the first TS signal 131 is inserted either the first CI slot 111 or the second CI slot 112, the first TS signal 131 is successfully decrypted.

Description has been given to the case when a user selects a channel which belongs to the first channel group, in the above. In contrast, when a user selects a channel which belongs to the second cannel group, the switching processing shown in FIG. 5 is performed on the second TS signal 132.

It should be noted that in the STB 200, the first TS signal 131 and the second TS signal 132 may be decrypted in parallel. In such a case, the priority order of the TS signal (receiving unit) which undergoes the switching processing may arbitrarily be decided by the user.

The case where the first TS signal 131 and the second TS signal 132 are decrypted in parallel is such that the first TS signal 131 is recorded in the HDD recorder 160 while the second TS signal 132 is watched through a television 150, for example.

At this time, if the input-receiving unit 106 receives an instruction by a user to record the first TS signal 131 in the HDD recorder 160, the controlling unit 105 may perform the switching processing on the first TS signal 131 (first receiving unit 101) in priority to the switching processing on the second TS signal 132 (second receiving unit 102).

In other words, the controlling unit 105 may perform the switching processing and start the decryption on the first TS signal 131 before starting the decryption on the second TS signal 132.

In general, a TS signal which the user wants to record is assumed to be of high importance. Accordingly, in order to avoid delay in start of recording the TS signal, it is desirable that the recording of the TS signal is promptly prepared. With the aforementioned configuration, the user can promptly prepare the recording of the TS signal.

### [1-3. Advantageous effects]

As described above, the controlling unit 105 in the STB 200 controls the switching by the switching unit 103 to cause the first TS signal 131 to be inputted to the first CI slot 111, in Embodiment 1. As a result of the input, if the decoder 104 determines that the signal outputted from the first CI slot 111 is not successfully decrypted, the controlling unit 105 controls the switching by the switching unit 103 to cause the first TS signal to be inputted to the second CI slot 112.

With this, even if the first CAM for decrypting the first TS signal 131 is inserted either in the first CI slot 111 or in the second CI slot 112, the first TS signal 131 is successfully decrypted. Thus, according to the STB 200, a user can watch the paid broadcasting even in a case where the CAM 108 is inserted in a wrong CI slot.

In Embodiment 1, the controlling unit 105 in the STB 200 determines whether or not the bit rate of the first TS signal 131 complies with the CAM 108a, and also determines whether or not the bit rate of the first TS signal 131 complies with the CAM 108b.

With this, the TS signal out of the range complying with the CAM is not to be inputted to the CAM, to thereby prevent a defect, such as a block-noise. In addition, the first TS signal 131 is not inputted to the CI slot accommodating the CAM 108 which does not comply with the bit rate of the first TS signal, to thereby shorten a time period for the switching processing. In other words, the controlling unit 105 in the STB 200 can efficiently perform the switching processing.

In Embodiment 1, if the bit rate of the first TS signal 131 complies with the CAM 108a, the controlling unit in the STB 200 sets a frequency of a clock signal according to the bit rate of the first TS signal 131. The first CI slot 111 decrypts the first TS signal 131 using the clock signal at the frequency set by the controlling unit 105, and outputs the decrypted first TS signal 131.

In a similar manner, if the bit rate of the first TS signal 131 complies with the CAM 108b, the controlling unit 105 sets the frequency of the clock signal according to the bit rate of the second TS signal. The second CI slot 112 decrypts the first TS signal 131 using the clock signal at the frequency set by the controlling unit 105, and outputs the decrypted first TS signal 131.

In the conventional STB 100 having the two-tuners and two slots, the STB has been destined in such a manner that the receivable broadcasting standard is only for the terrestrial broadcasting or only for the BS broadcasting, for example. Thus, the range of the bit rate of the broadcasting receivable as a set, and a type of corresponding CAM are limited, and a frequency which can be shared by the two CI slots can be used as the frequency of the clock signal used for the decryption.

However, if each of the first receiving unit 101 and the second receiving unit 102 corresponds to any one of the terrestrial broadcasting, the BS broadcasting, and the CS broadcasting, as in the STB 200, a range of the bit rate of the first TS signal 131 (second TS signal 132) becomes large depending on a type of broadcast wave or broadcasting organization. Furthermore, CAMs corresponding to different broadcasting standards may be simultaneously inserted in the set. For the occasion, if the first TS signal 131 or the second TS signal 132, and the CAM to which the corresponding TS signal is to be inputted are not correctly paired, the TS signal out of a standard range of the CAM may be inserted in the CAM. Therefore, in order to perform the aforementioned switching processing, a configuration is required in which the clock frequency can be arbitrarily changed according to each of the CI slots.

In other words, with the aforementioned configuration of setting the clock frequency in the STB 200, the CI slot for decrypting the first TS signal 131 can be arbitrarily switched.

Furthermore, in Embodiment 1, the controlling unit 105 in the STB 200 detects whether or not the CAM 108 is connected to the first CI slot 111, and also detects whether or not the CAM 108 is connected to the second CI slot 112.

With this configuration, the first TS signal 131 is not inputted to the CI slot to which the CAM 108 is not connected (inserted), to thereby shorten the time period for the switching processing. In other word, the controlling unit 105 in the STB 200 can efficiently perform the switching processing.

In Embodiment 1, the STB 200 includes the input-receiving unit 106 which receives selection of a channel by a user, and a memory unit 107 in which the priority information indicating the priority order of the switching by the switching unit 103 is stored.

Thus, if the first TS signal 131 is successfully decrypted by the first CI slot 111, the priority information indicating that the first TS signal is inputted preferentially to the first CI slot 111 is stored in the memory unit 107.

Therefore, when the decryption is again performed on the first TS signal 131, the first TS signal 131 is inputted, in accordance with the priority information, to the first CI slot 111 in which the first TS signal 131 is successfully decrypted with high probability.

With this, the time period for the switching processing is shortened, and the controlling unit 105 in the STB 200 can efficiently perform the switching processing.

### [Other embodiments]

As described above, Embodiment 1 has been described as an example of technique disclosed in the present application. However, the technique in the present disclosure is not limited to the above, but is applicable to an embodiment to which modification, replacement, addition, omission, and the like are arbitrarily performed. It is also possible to create a new embodiment by combining structural components described in the aforementioned Embodiment 1.

Hereinafter, other embodiments are described as a whole.

Although the controlling unit 105 is achieved as a microprocessor as an example in Embodiment 1, the controlling unit 105 may be achieved as a programmable microcomputer. If the programmable microcomputer is used, a content of the processing can be changed by changing a program. Accordingly, flexibility in a design for the controlling unit 105 can be increased.

In addition, the controlling unit 105 may be achieved as a hard logic. The controlling unit 105 is achieved as the hard logic, allowing processing speed to be effectively improved. The controlling unit 105 may be configured by a single element, and also by a plurality of elements physically. If a plurality of elements are used for forming the controlling unit 105, each of controlling processes recited in the scope of the claims may be achieved by different elements. In this case, it is possible to assume that these elements form a single controlling unit 105. In addition, the controlling unit 105 and a member which has a function different from that of the controlling unit 105 may be formed by a single element. In other words, the controlling unit 105 can be configured in any physical ways if the controlling unit 105 is used for controlling a broadcast receiver.

Although Embodiment 1 is achieved as the STB 200 including two tuners and two CI slots, the STB 200 may include two or more tuners and two or more CI slots. In this case, a priority order is set for every one of the CI slots, and the processing from Step S108 to Step S113 is repeated, which is performed when the decryption is not successfully performed in the CAM.

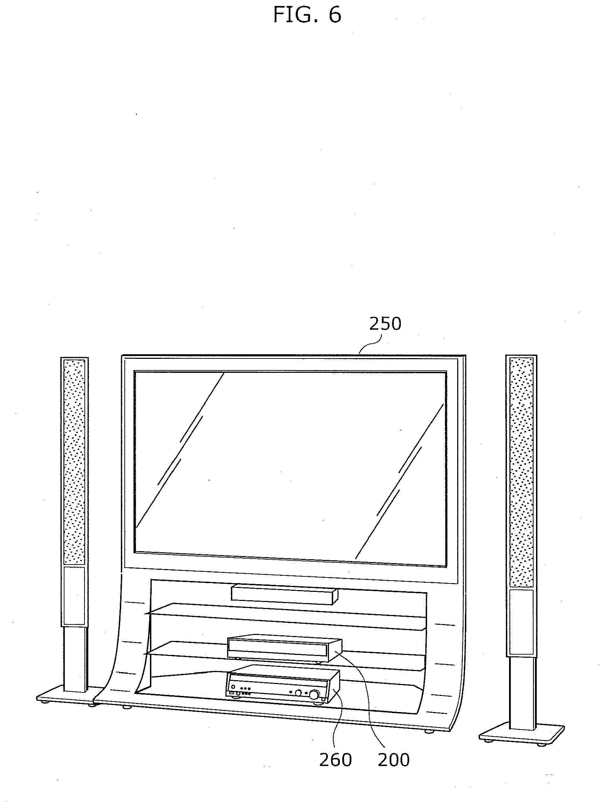

Although the broadcast receiver according to the present disclosure is achieved as the STB 200 in Embodiment 1, the broadcast receiver according to the present disclosure may be achieved, for example, as a television 250 shown in FIG. 6. For the occasion, the broadcast receiver may include a display unit. Furthermore, the broadcast receiver according to the present disclosure may be achieved as a Blu-ray recorder 260 shown in FIG. 6.

Furthermore, a part of or all of the components constituting the broadcast receiver according to the present disclosure may be achieved as a circuit composed of dedicated hardware, or may be achieved as a program to be executed by a processor. Accordingly, the following cases are included in the present disclosure.
(1) Each of the aforementioned respective devices may be achieved, specifically, as a computer system including a microprocessor, a ROM, a RAM, a hard disc unit, a display unit, a keyboard, a mouse, and so on. A computer program is stored in the RAM or the hard disc unit. The microprocessor operates in accordance with the computer program, so that each of the devices accomplishes its function. Here, the computer program is, for accomplishing a predetermined function, configured by combining a plurality of instruction codes indicating instructions for a computer.
(2) A part or all of the components constituting each of the above devices may be formed by a single System-LSI (Large-Sale Integration) circuit. The System LSI is a super multifunction LSI manufactured by integrating a plurality of constituent units on a single chip, and is, specifically, a computer system including a microprocessor, a ROM, a RAM, and so on. In the ROM, a computer program is stored. The microprocessor loads the computer program from the ROM to the RAM, and operates in accordance with the loaded computer program, so that the System-LSI accomplishes its function.
(3) A part or all of the components constituting each of the devices may be formed as an IC card which is detachable from each of the devices or a single module. The IC card or the module is a computer system including a microprocessor, a ROM, a RAM, and so on. The IC card or the module may include the super multifunction LSI. The microprocessor operates in accordance with the computer program, so that the IC card or the module accomplishes its function. The IC card or the module may have tamper resistance.
(4) The present disclosure may be achieved in the form of the method described above. In addition, the present disclosure may be achieved as a computer program which realizes the method by a computer, or may be achieved as digital signals including the computer program.

The present disclosure may also be achieved by storing the computer program or the digital signals in a computer readable recording medium, such as a flexible disc, a hard disc, a CD-ROM, an MO, a DVD, a DVD-ROM, a DVD-RAM, a Blue-ray disc (BD), a semiconductor memory, and so on. Alternatively, the present disclosure may also be achieved by the digital signals recorded in these recording media.

The present disclosure may also be achieved by transmission of the aforementioned computer program or digital signals via an electric telecommunication line, a wireless or wired communication line, a network represented by the Internet, a data broadcast, and so on.

The present disclosure may also be a computer system including a microprocessor and a memory, in which the memory stores the aforementioned computer program, and the microprocessor may operate in accordance with the computer program.

Furthermore, the program or the digital signals may be stored in the recording medium so as to be transferred, or the program or the digital signals may be transferred via the network or the like, so as to be executed by another independent computer system.
(5) The above embodiments and modifications may be combined arbitrarily.

As described heretofore, embodiments are described as an example of technique disclosed in the present disclosure. For the disclosure, the attached drawings and the detailed description are provided.

Accordingly, structural components illustrated in the attached drawings and described in the detailed disclosure may include not only necessary structural components but also unnecessary structural components for solving the problems, in order to exemplify the above technique. Therefore, the illustration or description of these unnecessary structural components in the attached drawings and the detailed description should not lead immediate recognition on the necessity of the unnecessary structural components.

The above described embodiments should be referred to as an example of the technique of the present disclosure. Accordingly, various modifications, replacement, addition, omission, and the like can be performed within the scope of the claims.

### Industrial Applicability

With a broadcast receiver according to the present disclosure, a user can watch a paid broadcasting even in a condition that a CAM is inserted in any one of CI slots. The broadcast receiver according to the present disclosure is usable as a set-top box, a television, an HDD recorder, and the like.

### Reference Signs List

- 100, 200: STB
- 101: First receiving unit
- 102: Second receiving unit
- 103: Switching unit
- 104: Decoder
- 105: Controlling unit
- 106: Input-receiving unit
- 107: Memory unit
- 108, 108a, 108b: CAM
- 109: Smart card
- 110: Clock generating circuit
- 111: First CI slot
- 112: Second CI slot
- 121: First antenna
- 122: Second antenna
- 131: First TS signal
- 132: Second TS signal
- 140: Distributing unit
- 150, 250: Television (Display unit)
- 160: HDD recorder
- 260: Blu-ray recorder

## Claims

1. A broadcast receiver comprising:
a first receiving unit (101) configured to receive a broadcast wave and output a first transport stream (TS) signal;
a second receiving unit (102) configured to receive a broadcast wave and output a second TS signal;
a first module (111) connected to a first card module (108a) including therein a decryption circuit, the first module (111) decrypting, using the decryption circuit, an inputted one of the first TS signal or the second TS signal, and outputting the decrypted first TS signal or the decrypted second TS signal;
a second module (112) connected to a second card module (108b) including therein a decryption circuit, the second module (112) decrypting, using the decryption circuit, an inputted one of the first TS signal or the second TS signal, and outputting the decrypted first TS signal or the decrypted second TS signal;
a decoder (104) which decodes a signal outputted from the first module (111) or the second module (112), and determines whether or not the signal is successfully decrypted;
a switching unit (103) configured to switch an input destination of the first TS signal or the second TS signal between the first module (111) and the second module (112);
and
a controlling unit (105) configured to control the switching by the switching unit (103), **characterized in that**
the controlling unit (105) is configured to perform switching processing for: controlling the switching by the switching unit (103) to cause the first TS signal to be inputted to the first module (111); and
controlling the switching by the switching unit (103) to cause the first TS signal to be inputted to the second module (112) when the decoder (104) determines that the signal outputted from the first module (111) as a result of the input is not successfully decrypted,
wherein the controlling unit (105) is further configured to:
(i) determine whether or not a bit rate of the first TS signal complies with a standard of the first card module (108a), and whether or not the bit rate of the first TS signal complies with a standard of the second card module (108b);
(ii) control the switching by the switching unit (103) to cause first TS signal to be inputted to the first module (111), when the bit rate of the first TS signal complies with the standard of the first card module (108a);
(iii) control the switching by the switching unit (103) to cause the first TS signal to be inputted to the second module (112), when the decoder (104) determines that the signal outputted from the first module (111) as a result of the input is not successfully decrypted, and the bit rate of the first TS signal complies with the standard of the second card module (108b); and
(iv) further control the switching by the switching unit (103) to cause the first TS signal to be inputted to the decoder (104), when the decoder (104) determines that the signal outputted from the first module (111) as a result of the input is not successfully decrypted, and the bit rate of the first TS signal does not comply with the standard of the second card module (108b),
wherein when the bit rate of the first TS signal complies with the standard of the first card module (108a), the controlling unit (105) is configured to set a first frequency of a first clock signal to be inputted to the first module (111) according to the bit rate of the first TS signal, and the first module (111) decrypts the first TS signal using the first clock signal at the first frequency set by the controlling unit (105) and outputs the decrypted first TS signal, and
when the bit rate of the first TS signal complies with the standard of the second card module (108b), the controlling unit (105) is configured to set a second frequency of a second clock signal to be inputted to the second module (112) according to the bit rate of the first TS signal, and the second module (112) decrypts the first TS signal using the second clock signal at the second frequency set by the controlling unit (105) and outputs the decrypted first TS signal.

2. The broadcast receiver according to Claim 1, further comprising an input-receiving unit (106).

3. The broadcast receiver according to Claim 2,
wherein the input-receiving unit (106) is configured to receive selection of a channel by a user; and the broadcast receiver further comprising
a memory unit (107) in which priority information indicating a priority order of the switching by the switching unit (103) is stored,
wherein the first TS signal includes a video-and-audio signal belonging to a first channel group,
when (i) the input-receiving unit (106) receives the selection of the channel included in the first channel group, (ii) the first TS signal is inputted to the first module (111), and (iii) the decoder (104) determines that the signal outputted from the first module (111) is a successfully decrypted signal, the controlling unit (105) is configured to store, in the memory unit (107), the priority information indicating that the first TS signal is inputted to the first module (111) in priority to the second module (112), and when the input-receiving unit (106) again receives the selection of the channel included in the first channel group, the controlling unit (105) is configured to perform the switching processing.

4. The broadcast receiver according to any one of Claims 2 to 3,
wherein the input-receiving unit (106) is configured to receive designation of a receiving unit by a user,
wherein when the first TS signal and the second TS signal are decrypted in parallel, and the input-receiving unit (106) receives designation of the first receiving unit (101), the controlling unit (105) is configured to perform the switching processing and start decrypting the first TS signal, before starting decrypting the second TS signal.

5. The broadcast receiver according to any one of Claims 1 to 4, wherein the controlling unit is further configured to:
(i) detect whether or not the first card module (108a) is connected to the first module (111), and whether or not the second card module (108b) is connected to the second module (112);
(ii) control the switching by the switching unit (103) to cause the first TS signal to be inputted to the first module (111), when the first card module (108a) is connected to the first module (111); and
(iii) perform the switching processing for controlling the switching by the switching unit (103) to cause the first TS signal to be inputted to the second module (112), when the decoder 8104) determines that the signal outputted from the first module (111) as a result of the input is not successfully decrypted, and the second card module (108b) is connected to the second module (112).

6. The broadcast receiver according to any one of Claims 1 to 5, wherein the broadcast wave is a broadcast wave of a terrestrial broadcasting, broadcasting satellite (BS) broadcasting, or communication satellite (CS) broadcasting.

7. A method for controlling a broadcast receiver, the broadcast receiver including:
a first receiving unit (101) configured to receive a broadcast wave and output a first transport stream (TS) signal;
a second receiving unit (102) configured to receive a broadcast wave and output a second TS signal;
a first module (111) connected to a first card module 8108a) including therein a decryption circuit, the first module (111) decrypting, using the decryption circuit, an inputted one of the first TS signal or the second TS signal, and outputting the decrypted first TS signal or the decrypted second TS signal;
a second module (112) connected to a second card module (108b) including therein a decryption circuit, the second module (112) decrypting, using the decryption circuit, an inputted one of the first TS signal or the second TS signal, and outputting the decrypted first TS signal or the decrypted second TS signal;
a decoder (104) which decodes a signal outputted from the first module (111) or the second module (112), and determines whether or not the signal is successfully decrypted; and
a switching unit (103) configured to switch an input destination of the first TS signal or the second TS signal between the first module (111) and the second module (112), **characterized in that** the method comprises:
inputting the first TS signal to the first module (111) by controlling the switching by the switching unit (103);
inputting the first TS signal to the second module (112) by controlling the switching by the switching unit (103), when the decoder (104) determines that the signal outputted from the first module (111) as a result of the input of the first TS signal to the first module (111) in the inputting is not successfully decrypted;
determining whether or not a bit rate of the first TS signal complies with a standard of the first card module (108a), and whether or not the bit rate of the first TS signal complies with a standard of the second card module (108b);
controlling the switching by the switching unit (103) to cause first TS signal to be inputted to the first module (111), when the bit rate of the first TS signal complies with the standard of the first card module (108a);
controlling the switching by the switching unit (103) to cause the first TS signal to be inputted to the second module (112), when the decoder (104) determines that the signal outputted from the first module (111) as a result of the input is not successfully decrypted, and the bit rate of the first TS signal complies with the standard of the second card module (108b);
further controlling the switching by the switching unit (103) to cause the first TS signal to be inputted to the decoder (104), when the decoder (104) determines that the signal outputted from the first module (111) as a result of the input is not successfully decrypted, and the bit rate of the first TS signal does not comply with the standard of the second card module (108b), and
when the bit rate of the first TS signal complies with the standard of the first card module (108a), setting, by means of the controlling unit (105), a first frequency of a first clock signal to be inputted to the first module (111) according to the bit rate of the first TS signal, the first module (111) decrypting the first TS signal using the first clock signal at the first frequency set by the controlling unit (105) and outputting the decrypted first TS signal, and
when the bit rate of the first TS signal complies with the standard of the second card module (108b), setting, by means of the controlling unit (105), a second frequency of a second clock signal to be inputted to the second module (112) according to the bit rate of the first TS signal, the second module (112) decrypting the first TS signal using the second clock signal at the second frequency set by the controlling unit (105) and outputting the decrypted first TS signal.

## Patentansprüche

1. Rundfunkempfänger, aufweisend:
eine erste Empfangseinheit (101), konfiguriert für Empfang einer Rundfunkwelle und Ausgabe eines ersten Transportstrom-(TS-)Signals;
eine zweite Empfangseinheit (102), konfiguriert für Empfang einer Rundfunkwelle und Ausgabe eines zweiten TS-Signals;
ein erstes Modul (111), verbunden mit einem ersten Kartenmodul (108a), das eine Entschlüsselungsschaltung enthält, wobei das erste Modul (111), unter Anwenden der Entschlüsselungsschaltung, ein eingegebenes des ersten TS-Signals oder des zweiten TS-Signals entschlüsselt und das entschlüsselte erste TS-Signal oder das entschlüsselte zweite TS-Signal ausgibt;
ein zweites Modul (112), verbunden mit einem zweiten Kartenmodul (108b), das eine Entschlüsselungsschaltung enthält, wobei das zweite Modul (112), unter Anwenden der Entschlüsselungsschaltung, ein eingegebenes des ersten TS-Signals oder des zweiten TS-Signals entschlüsselt und das entschlüsselte erste TS-Signal oder das entschlüsselte zweite TS-Signal ausgibt;
einen Decoder (104), der ein vom ersten Modul (111) oder vom zweiten Modul (112) ausgegebenes Signal decodiert und bestimmt, ob das Signal erfolgreich entschlüsselt worden ist oder nicht;
eine Schalteinheit (103), konfiguriert für Umschalten eines Eingabeziels des ersten TS-Signals oder des zweiten TS-Signals zwischen dem ersten Modul (111) und dem zweiten Modul (112); und
eine Steuereinheit (105), konfiguriert für Steuern des Umschaltens durch die Schalteinheit (103),
**dadurch gekennzeichnet, dass**
die Steuereinheit (105) konfiguriert ist für Durchführen einer Schaltverarbeitung zum:
Steuern des Umschaltens durch die Schalteinheit (103), um zu bewirken, dass das erste TS-Signal in das erste Modul (111) eingegeben wird; und
Steuern des Umschaltens durch die Schalteinheit (103), um zu bewirken, dass das erste TS-Signal in das zweite Modul (112) eingegeben wird, wenn der Decoder (104), als ein Resultat der Eingabe, bestimmt, dass das vom ersten Modul (111) ausgegebene Signal nicht erfolgreich entschlüsselt worden ist,
wobei die Steuereinheit (105) ferner konfiguriert ist für:
(i) Bestimmen, ob eine Bitrate des ersten TS-Signals mit einem Standard des ersten Kartenmoduls (108a) übereinstimmt oder nicht, und ob die Bitrate des ersten TS-Signals mit einem Standard des zweiten Kartenmoduls (108b) übereinstimmt oder nicht;
(ii) Steuern des Umschaltens durch die Schalteinheit (103), um zu bewirken, dass das erste TS-Signal in das erste Modul (111) eingegeben wird, wenn die Bitrate des ersten TS-Signals mit dem Standard des ersten Kartenmoduls (108a) übereinstimmt;
(iii) Steuern des Umschaltens durch die Schalteinheit (103), um zu bewirken, dass das erste TS-Signal in das zweite Modul (112) eingegeben wird, wenn der Decoder (104), als ein Resultat der Eingabe, bestimmt, dass das vom ersten Modul (111) ausgegebene Signal nicht erfolgreich entschlüsselt worden ist und die Bitrate des ersten TS-Signals mit dem Standard des zweiten Kartenmoduls (108b) übereinstimmt; und
(iv) ferner Steuern des Umschaltens durch die Schalteinheit (103), um zu bewirken, dass das erste TS-Signal in den Decoder (104) eingegeben wird, wenn der Decoder (104), als ein Resultat der Eingabe, bestimmt, dass das vom ersten Modul (111) ausgegebene Signal nicht erfolgreich entschlüsselt worden ist und die Bitrate des ersten TS-Signals nicht mit dem Standard des zweiten Kartenmoduls (108b) übereinstimmt,
wobei, wenn die Bitrate des ersten TS-Signals mit dem Standard des ersten Kartenmoduls (108a) übereinstimmt, die Steuereinheit (105) konfiguriert ist für Einstellen einer ersten Frequenz eines ersten Taktsignals, das entsprechend der Bitrate des ersten TS-Signals in das erste Modul (111) einzugeben ist, und das erste Modul (111) das erste TS-Signal unter Anwenden des ersten Taktsignals bei der ersten von der Steuereinheit (105) eingestellten Frequenz entschlüsselt und das entschlüsselte erste TS-Signal ausgibt, und
wenn die Bitrate des ersten TS-Signals mit dem Standard des zweiten Kartenmoduls (108b) übereinstimmt, die Steuereinheit (105) konfiguriert ist für Einstellen einer zweiten Frequenz eines zweiten Taktsignals, das entsprechend der Bitrate des ersten TS-Signals in das zweite Modul (112) einzugeben ist, und das zweite Modul (112) das erste TS-Signal unter Anwenden des zweiten Taktsignals bei der zweiten von der Steuereinheit (105) eingestellten Frequenz entschlüsselt und das entschlüsselte erste TS-Signal ausgibt.

2. Rundfunkempfänger nach Anspruch 1, ferner aufweisend eine Eingabeempfangseinheit (106).

3. Rundfunkempfänger nach Anspruch 2,
wobei die Eingabeempfangseinheit (106) konfiguriert ist für Empfangen der Auswahl eines Kanals durch einen Nutzer; und wobei der Rundfunkempfänger ferner aufweist:
eine Speichereinheit (107), in der Prioritätsinformation, die eine Prioritätsreihenfolge des Umschaltens durch die Schalteinheit (103) angibt, gespeichert ist,
wobei das erste TS-Signal ein zu einer ersten Kanalgruppe gehörendes Video- und Audiosignal enthält,
wenn (i) die Eingabeempfangseinheit (106) die in der ersten Kanalgruppe enthaltene Auswahl des Kanals empfängt, (ii) das erste TS-Signal in das erste Modul (111) eingegeben wird und (iii) der Decoder (104) bestimmt, dass das vom ersten Modul (111) ausgegebene Signal ein erfolgreich entschlüsseltes Signal ist, ist die Steuereinheit (105) konfiguriert für Speichern, in der Speichereinheit (107), der Prioritätsinformation, die angibt, dass das erste TS-Signal in das erste Modul (111) vorrangig zum zweiten Modul (112) eingegeben wird, und wenn die Eingabeempfangseinheit (106) erneut die in der ersten Kanalgruppe enthaltene Auswahl des Kanals empfängt, die Steuereinheit (105) konfiguriert ist für Durchführen der Schaltverarbeitung.

4. Rundfunkempfänger nach einem der Ansprüche 2 bis 3,
wobei die Eingabeempfangseinheit (106) konfiguriert ist für Empfangen einer Bezeichnung einer Empfangseinheit durch einen Nutzer,
wobei, wenn das erste TS-Signal und das zweite TS-Signal parallel entschlüsselt werden und die Eingabeempfangseinheit (106) die Bezeichnung der ersten Empfangseinheit (101) empfängt, die Steuereinheit (105) konfiguriert ist für Durchführen der Schaltverarbeitung und Beginnen des Entschlüsselns des ersten TS-Signals vor einem Beginnen des Entschlüsselns des zweiten TS-Signals.

5. Rundfunkempfänger nach einem der Ansprüche 1 bis 4, wobei die Steuereinheit ferner konfiguriert ist für:
(i) Erfassen, ob das erste Kartenmodul (108a) mit dem ersten Modul (111) verbunden ist oder nicht, und ob das zweite Kartenmodul (108b) mit dem zweiten Modul (112) verbunden ist oder nicht;
(ii) Steuern des Umschaltens durch die Schalteinheit (103), um zu bewirken, dass das erste TS-Signal in das erste Modul (111) eingegeben wird, wenn das erste Kartenmodul (108a) mit dem ersten Modul (111) verbunden ist; und
(iii) Durchführen der Umschaltverarbeitung zum Steuern des Umschaltens durch die Umschalteinheit (103), um zu bewirken, dass das erste TS-Signal in das zweite Modul (112) eingegeben wird, wenn der Decoder (104), als ein Resultat der Eingabe, bestimmt, dass das vom ersten Modul (111) als Ergebnis der Eingabe ausgegebene Signal nicht erfolgreich entschlüsselt worden ist und das zweite Kartenmodul (108b) mit dem zweiten Modul (112) verbunden ist.

6. Rundfunkempfänger nach einem der Ansprüche 1 bis 5, wobei die Rundfunkwelle eine Rundfunkwelle eines terrestrischen Rundfunks, eines Rundfunksatelliten (BS) oder eines Kommunikationssatelliten (CS) ist.

7. Verfahren zum Steuern eines Rundfunkempfängers, wobei der Rundfunkempfänger umfasst:
eine erste Empfangseinheit (101), konfiguriert für Empfang einer Rundfunkwelle und Ausgabe eines ersten Transportstrom-(TS-)Signals;
eine zweite Empfangseinheit (102), konfiguriert für Empfang einer Rundfunkwelle und Ausgabe eines zweiten TS-Signals;
ein erstes Modul (111), verbunden mit einem ersten Kartenmodul (108a), das eine Entschlüsselungsschaltung enthält, wobei das erste Modul (111), unter Anwenden der Entschlüsselungsschaltung, ein eingegebenes des ersten TS-Signals oder des zweiten TS-Signals entschlüsselt und das entschlüsselte erste TS-Signal oder das entschlüsselte zweite TS-Signal ausgibt;
ein zweites Modul (112), verbunden mit einem zweiten Kartenmodul (108b), das eine Entschlüsselungsschaltung enthält, wobei das zweite Modul (112), unter Anwenden der Entschlüsselungsschaltung, ein eingegebenes des ersten TS-Signals oder des zweiten TS-Signals entschlüsselt und das entschlüsselte erste TS-Signal oder das entschlüsselte zweite TS-Signal ausgibt;
einen Decoder (104), der ein vom ersten Modul (111) oder vom zweiten Modul (112) ausgegebenes Signal decodiert und bestimmt, ob das Signal erfolgreich entschlüsselt worden ist oder nicht; und
eine Schalteinheit (103), konfiguriert für Umschalten eines Eingabeziels des ersten TS-Signals oder des zweiten TS-Signals zwischen dem ersten Modul (111) und dem zweiten Modul (112) ;
**dadurch gekennzeichnet, dass** das Verfahren Folgendes umfasst:
Eingabe des ersten TS-Signals in das erste Modul (111) durch Steuern des Umschaltens durch die Schalteinheit (103);
Eingabe des ersten TS-Signals in das zweite Modul (112) durch Steuern des Umschaltens durch die Schalteinheit (103), wenn der Decoder (104), als ein Resultat der Eingabe des ersten TS-Signals in das erste Modul (111), bestimmt, dass das in der Eingabe vom ersten Modul (111) ausgegebene Signal nicht erfolgreich entschlüsselt worden ist;
Bestimmen, ob eine Bitrate des ersten TS-Signals mit einem Standard des ersten Kartenmoduls (108a) übereinstimmt oder nicht, und ob die Bitrate des ersten TS-Signals mit einem Standard des zweiten Kartenmoduls (108b) übereinstimmt oder nicht;
Steuern des Umschaltens durch die Schalteinheit (103), um zu bewirken, dass das erste TS-Signal in das erste Modul (111) eingegeben wird, wenn die Bitrate des ersten TS-Signals mit dem Standard des ersten Kartenmoduls (108a) übereinstimmt;
Steuern des Umschaltens durch die Schalteinheit (103), um zu bewirken, dass das erste TS-Signal in das zweite Modul (112) eingegeben wird, wenn der Decoder (104), als ein Resultat der Eingabe, bestimmt, dass das vom ersten Modul (111) ausgegebene Signal nicht erfolgreich entschlüsselt worden ist und die Bitrate des ersten TS-Signals mit dem Standard des zweiten Kartenmoduls (108b) übereinstimmt;
ferner Steuern des Umschaltens durch die Schalteinheit (103), um zu bewirken, dass das erste TS-Signal in den Decoder (104) eingegeben wird, wenn der Decoder (104), als ein Resultat der Eingabe, bestimmt, dass das vom ersten Modul (111) ausgegebene Signal nicht erfolgreich entschlüsselt worden ist und die Bitrate des ersten TS-Signals nicht mit dem Standard des zweiten Kartenmoduls (108b) übereinstimmt, und
wenn die Bitrate des ersten TS-Signals mit dem Standard des ersten Kartenmoduls (108a) übereinstimmt, Einstellen durch die Steuereinheit (105) einer ersten Frequenz eines ersten Taktsignals, das entsprechend der Bitrate des ersten TS-Signals in das erste Modul (111) einzugeben ist, wobei das erste Modul (111) das erste TS-Signal unter Anwenden des ersten Taktsignals bei der ersten von der Steuereinheit (105) eingestellten Frequenz entschlüsselt und das entschlüsselte erste TS-Signal ausgibt, und
wenn die Bitrate des ersten TS-Signals mit dem Standard des zweiten Kartenmoduls (108b) übereinstimmt, Einstellen durch die Steuereinheit (105) einer zweiten Frequenz eines zweiten Taktsignals, das entsprechend der Bitrate des zweiten TS-Signals in das zweite Modul (112) einzugeben ist, wobei das zweite Modul (112) das erste TS-Signal unter Anwenden des zweiten Taktsignals bei der zweiten von der Steuereinheit (105) eingestellten Frequenz entschlüsselt und das entschlüsselte erste TS-Signal ausgibt.

## Revendications

1. Récepteur de radiodiffusion comprenant :
une première unité de réception (101) conçue pour recevoir une onde de radiodiffusion et délivrer en sortie un premier signal de flux de transport (TS, *transport stream*) *;*
une seconde unité de réception (102) conçue pour recevoir une onde de radiodiffusion et délivrer en sortie un second signal de TS ;
un premier module (111) connecté à un premier module de type carte (108a) comportant un circuit de déchiffrement, le premier module (111) déchiffrant, à l'aide du circuit de déchiffrement, un signal appliqué en entrée parmi le premier signal de TS et le second signal de TS, et délivrant en sortie le premier signal de TS déchiffré ou le second signal de TS déchiffré ;
un second module (112) connecté à un second module de type carte (108b) comportant un circuit de déchiffrement, le second module (112) déchiffrant, à l'aide du circuit de déchiffrement, un signal appliqué en entrée parmi le premier signal de TS et le second signal de TS, et délivrant en sortie le premier signal de TS déchiffré ou le second signal de TS déchiffré ;
un décodeur (104) qui décode un signal délivré en sortie du premier module (111) ou du second module (112), et détermine si le signal est ou non déchiffré avec succès ;
une unité de commutation (103) conçue pour commuter une destination d'entrée du premier signal de TS ou du second signal de TS entre le premier module (111) et le second module (112) ; et
une unité de commande (105) conçue pour commander la commutation par l'unité de commutation (103),
**caractérisé en ce que** :
l'unité de commande (105) est conçue pour effectuer un traitement de commutation destiné à :
commander la commutation par l'unité de commutation (103) pour faire que le premier signal de TS soit appliqué à l'entrée du premier module (111) ; et
commander la commutation par l'unité de commutation (103) pour faire que le premier signal de TS soit appliqué à l'entrée du second module (112), lorsque le décodeur (104) détermine que le signal délivré en sortie du premier module (111) par suite de l'entrée n'est pas déchiffré avec succès,
dans lequel l'unité de commande (105) est conçue en outre pour :
(i) déterminer si un débit binaire du premier signal de TS est ou non conforme à une norme du premier module de type carte (108a), et si le débit binaire du premier signal de TS est ou non conforme à une norme du second module de type carte (108b) ;
(ii) commander la commutation par l'unité de commutation (103) pour faire que le premier signal de TS soit appliqué à l'entrée du premier module (111), lorsque le débit binaire du premier signal de TS est conforme à la norme du premier module de type carte (108a) ;
(iii) commander la commutation par l'unité de commutation (103) pour faire que le premier signal de TS soit appliqué à l'entrée du second module (112), lorsque le décodeur (104) détermine que le signal délivré en sortie du premier module (111) par suite de l'entrée n'est pas déchiffré avec succès, et que le débit binaire du premier signal de TS est conforme à la norme du second module de type carte (108b) ; et
(iv) commander en outre la commutation par l'unité de commutation (103) pour faire que le premier signal de TS soit appliqué à l'entrée du décodeur (104), lorsque le décodeur (104) détermine que le signal délivré en sortie du premier module (111) par suite de l'entrée n'est pas déchiffré avec succès, et que le débit binaire du premier signal de TS n'est pas conforme à la norme du second module de type carte (108b),
dans lequel, lorsque le débit binaire du premier signal de TS est conforme à la norme du premier module de type carte (108a), l'unité de commande (105) est conçue pour régler une première fréquence de premier signal d'horloge à appliquer à l'entrée du premier module (111), en fonction du débit binaire du premier signal de TS, et le premier module (111) déchiffre le premier signal de TS à l'aide du premier signal d'horloge à la première fréquence réglée par l'unité de commande (105) et délivre en sortie le premier signal de TS déchiffré, et
lorsque le débit binaire du premier signal de TS est conforme à la norme du second module de type carte (108b), l'unité de commande (105) est conçue pour régler une seconde fréquence de second signal d'horloge à appliquer à l'entrée du second module (112), en fonction du débit binaire du premier signal de TS, et le second module (112) déchiffre le premier signal de TS à l'aide du second signal d'horloge à la seconde fréquence réglée par l'unité de commande (105) et délivre en sortie le premier signal de TS déchiffré.

2. Récepteur de radiodiffusion selon la revendication 1, comprenant en outre une unité de réception d'entrée (106).

3. Récepteur de radiodiffusion selon la revendication 2, dans lequel l'unité de réception d'entrée (106) est conçue pour recevoir une sélection de canal par un utilisateur ; et le récepteur de radiodiffusion comprenant en outre une unité de mémoire (107) dans laquelle sont stockées des informations de priorité indiquant un ordre de priorité de la commutation par l'unité de commutation (103),
dans lequel le premier signal de TS inclut un signal vidéo et audio appartenant à un premier groupe de canaux,
lorsque (i) l'unité de réception d'entrée (106) reçoit la sélection du canal inclus dans le premier groupe de canaux, (ii) le premier signal de TS est appliqué à l'entrée du premier module (111), et (iii) le décodeur (104) détermine que le signal délivré en sortie du premier module (111) est un signal déchiffré avec succès, l'unité de commande (105) est conçue pour stocker, dans l'unité de mémoire (107), les informations de priorité indiquant que le premier signal de TS est appliqué à l'entrée du premier module (111) en priorité par rapport au second module (112), et lorsque l'unité de réception d'entrée (106) reçoit de nouveau la sélection du canal inclus dans le premier groupe de canaux, l'unité de commande (105) est conçue pour effectuer le traitement de commutation.

4. Récepteur de radiodiffusion selon l'une quelconque des revendications 2 à 3,
dans lequel l'unité de réception d'entrée (106) est conçue pour recevoir une désignation d'unité de réception par un utilisateur,
dans lequel, lorsque le premier signal de TS et le second signal de TS sont déchiffrés en parallèle, et que l'unité de réception d'entrée (106) reçoit la désignation de la première unité de réception (101), l'unité de commande (105) est conçue pour effectuer le traitement de commutation et démarrer le déchiffrement du premier signal de TS, avant de démarrer le déchiffrement du second signal de TS.

5. Récepteur de radiodiffusion selon l'une quelconque des revendications 1 à 4, dans lequel l'unité de commande est conçue en outre pour :
(i) détecter si le premier module de type carte (108a) est ou non connecté au premier module (111), et si le second module de type carte (108b) est ou non connecté au second module (112) ;
(ii) commander la commutation par l'unité de commutation (103) pour faire que le premier signal de TS soit appliqué à l'entrée du premier module (111), lorsque le premier module de type carte (108a) est connecté au premier module (111) ; et
(iii) effectuer le traitement de commutation pour commander la commutation par l'unité de commutation (103) afin de faire que le premier signal de TS soit appliqué à l'entrée du second module (112), lorsque le décodeur (104) détermine que le signal délivré en sortie du premier module (111) par suite de l'entrée n'est pas déchiffré avec succès, et que le second module de type carte (108b) est connecté au second module (112).

6. Récepteur de radiodiffusion selon l'une quelconque des revendications 1 à 5, dans lequel l'onde de radiodiffusion est une onde de radiodiffusion d'une radiodiffusion terrestre, d'une radiodiffusion par satellite de radiodiffusion (BS, *broadcasting satellite*) ou d'une radiodiffusion par satellite de communication (CS, *communication satellite*).

7. Procédé pour commander un récepteur de radiodiffusion, le récepteur de radiodiffusion comportant :
une première unité de réception (101) conçue pour recevoir une onde de radiodiffusion et délivrer en sortie un premier signal de flux de transport (TS, *transport stream*) *;*
une seconde unité de réception (102) conçue pour recevoir une onde de radiodiffusion et délivrer en sortie un second signal de TS ;
un premier module (111) connecté à un premier module de type carte (108a) comportant un circuit de déchiffrement, le premier module (111) déchiffrant, à l'aide du circuit de déchiffrement, un signal appliqué en entrée parmi le premier signal de TS et le second signal de TS, et délivrant en sortie le premier signal de TS déchiffré ou le second signal de TS déchiffré ;
un second module (112) connecté à un second module de type carte (108b) comportant un circuit de déchiffrement, le second module (112) déchiffrant, à l'aide du circuit de déchiffrement, un signal appliqué en entrée parmi le premier signal de TS et le second signal de TS, et délivrant en sortie le premier signal de TS déchiffré ou le second signal de TS déchiffré ;
un décodeur (104) qui décode un signal délivré en sortie du premier module (111) ou du second module (112), et détermine si le signal est ou non déchiffré avec succès ; et
une unité de commutation (103) conçue pour commuter une destination d'entrée du premier signal de TS ou du second signal de TS entre le premier module (111) et le second module (112),
**caractérisé en ce que** le procédé comprend les étapes suivantes :
appliquer le premier signal de TS à l'entrée du premier module (111), en commandant la commutation par l'unité de commutation (103) ;
appliquer le premier signal de TS à l'entrée du second module (112), en commandant la commutation par l'unité de commutation (103), lorsque le décodeur (104) détermine que le signal délivré en sortie du premier module (111) par suite de l'application du premier signal de TS à l'entrée du premier module (111) lors de l'application en entrée n'est pas déchiffré avec succès ;
déterminer si un débit binaire du premier signal de TS est ou non conforme à une norme du premier module de type carte (108a), et si le débit binaire du premier signal de TS est ou non conforme à une norme du second module de type carte (108b) ;
commander la commutation par l'unité de commutation (103) pour faire que le premier signal de TS soit appliqué à l'entrée du premier module (111), lorsque le débit binaire du premier signal de TS est conforme à la norme du premier module de type carte (108a) ;
commander la commutation par l'unité de commutation (103) pour faire que le premier signal de TS soit appliqué à l'entrée du second module (112), lorsque le décodeur (104) détermine que le signal délivré en sortie du premier module (111) par suite de l'entrée n'est pas déchiffré avec succès, et que le débit binaire du premier signal de TS est conforme à la norme du second module de type carte (108b) ;
commander en outre la commutation par l'unité de commutation (103) pour faire que le premier signal de TS soit appliqué à l'entrée du décodeur (104), lorsque le décodeur (104) détermine que le signal délivré en sortie du premier module (111) par suite de l'entrée n'est pas déchiffré avec succès, et que le débit binaire du premier signal de TS n'est pas conforme à la norme du second module de type carte (108b), et
lorsque le débit binaire du premier signal de TS est conforme à la norme du premier module de type carte (108a), régler, au moyen de l'unité de commande (105), une première fréquence de premier signal d'horloge à appliquer à l'entrée du premier module (111), en fonction du débit binaire du premier signal de TS, le premier module (111) déchiffrant le premier signal de TS à l'aide du premier signal d'horloge à la première fréquence réglée par l'unité de commande (105) et délivrant en sortie le premier signal de TS déchiffré, et
lorsque le débit binaire du premier signal de TS est conforme à la norme du second module de type carte (108b), régler, au moyen l'unité de commande (105), une seconde fréquence de second signal d'horloge à appliquer à l'entrée du second module (112), en fonction du débit binaire du premier signal de TS, le second module (112) déchiffrant le premier signal de TS à l'aide du second signal d'horloge à la seconde fréquence réglée par l'unité de commande (105) et délivrant en sortie le premier signal de TS déchiffré.
